# EUROPEAN PATENT SPECIFICATION

(11) **EP 2 499 692 B1**
(45) Date of publication and mention of the grant of the patent: **27.07.2016**
(21) Application number: 10803037.0
(22) Date of filing: 10.11.2010
(51) Int. Cl.: B01D 71/82, H01M 8/10

(54) **COMPOSITE PROTON CONDUCTING MEMBRANE WITH LOW DEGRADATION AND MEMBRANE ELECTRODE ASSEMBLY FOR FUEL CELLS INCLUDING THE SAME**
PROTONENLEITENDE VERBUNDMEMBRAN MIT NIEDRIGER DEGRADATION UND MEMBRANELEKTRODENANORDNUNG FÜR BRENNSTOFFZELLEN DIESELBE UMFASSEND
MEMBRANE COMPOSITE CONDUCTRICE DE PROTONS À FAIBLE DÉGRADATION ET ASSEMBLAGE MEMBRANE-ÉLECTRODES POUR PILES À COMBUSTIBLE INCLUANT CETTE DERNIÈRE

(30) Priority: 10.11.2009 US 615671
(43) Date of publication of application: 19.09.2012
(73) Proprietor: Daimler AG, 70327 Stuttgart (DE); Ford Motor Company, Dearborn, MI 48126 (US)
(72) Inventor: LI, Jing, BC V4N 0C4 (CA); WANG, Keping, Richmond BC V6V 2X6 (CA); YANG, Yunsong, BC V3V 4L3 (CA)
(74) Representative: JENSEN & SON
(86) International application number: PCT/EP2010/006835
(87) International publication number: WO 2011/057768

(56) References cited:
- WO-A1-2007/144633
- WO-A1-2008/025465
- WO-A2-2004/040685
- WO-A2-2005/072413
- JP-A- 4 136 040
- JP-A- 2006 269 266
- JP-A- 2008 288 097
- US-A1- 2005 136 308
- US-A1- 2006 083 976
- US-A1- 2006 199 062
- US-A1- 2006 280 982
- R. WYCISK ET AL.: "Direct methanol fuel cell membranes from Nafion-polybenzimidazole blends", JOURNAL OF POWER SOURCES, vol. 163, no. 1, 7 December 2006 (2006-12-07), pages 9-17, XP025084657, ISSN: 0378-7753, DOI: DOI:10.1016/J.JPOWSOUR.2005.11.056 [retrieved on 2006-12-07]

## Description

### BACKGROUND

Proton exchange membrane fuel cells (PEMFCs) convert reactants, namely fuel (such as H₂) and oxidant (such as O₂ or air), to generate electric power. PEMFCs generally employ a proton conducting polymer membrane between two electrodes, namely a cathode and an anode. A structure comprising a proton conducting polymer membrane sandwiched between two electrodes is known as a membrane electrode assembly (MEA). MEA durability is one of the most important issues for the development of fuel cell systems in either stationary or transportation applications. For automotive application, an MEA is required to demonstrate durability of about 6,000 hours.

The membrane serves as a separator to prevent mixing of reactant gases and as an electrolyte for transporting protons from anode to cathode. Perfluorosulfonic acid (PFSA) ionomer, e.g., Nafion^{®}, has been the material of choice and the technology standard for membranes. Nafion^{®} consists of a perfluorinated backbone that bears pendent vinyl ether side chains, terminating with SO₃H. The chemical structure of Nafion^{®} is as follows:

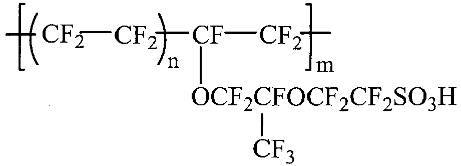

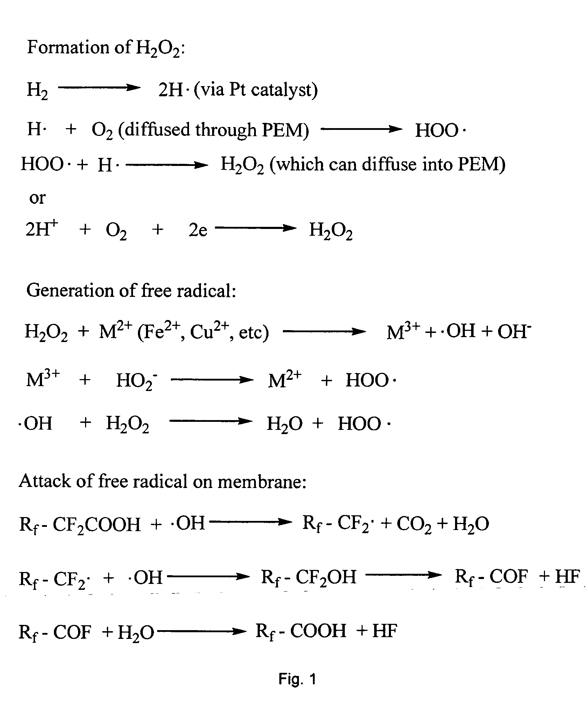

Failure of the membrane as an electrolyte will result in decreased performance due to increased ionic resistance, and failure of the membrane as a separator will result in fuel cell failure due to mixing of anode and cathode reactant gases. The chemical degradation of PFSA membrane during fuel cell operation is proposed to proceed via the attack of hydroxyl (•OH) or peroxyl (•OOH) radical species on weak groups (such as a carboxylic acid group) on the ionomer molecular chain. The free radicals may be generated by the decomposition of hydrogen peroxide with impurities (such as Fe²⁺) in a Fenton type reaction. In fuel cells, hydrogen peroxide can be formed either at Pt supported on carbon black in the catalyst layers or during the oxygen reduction reaction. The formation of hydrogen peroxide, generation of free radical, and degradation of the membrane are depicted in the scheme of Fig. 1.

The hydroxyl radical attacks the polymer at unstable end groups to cause chain zipping and/or could also attack an SO₃⁻ group under dry condition to cause polymer chain scission. Both attacks degrade the membrane and eventually lead to membrane cracking, thinning or forming of pinholes. The membrane degradation rate is accelerated significantly with increasing of the operation temperature and decreasing inlet gas relative humidity (RH).

Additive technologies have been applied to reduce membrane degradation in fuel cells. Additives studied included metal chelating agents, antioxidants, free radical scavengers, catalysts for decomposition of hydrogen peroxide, and combinations thereof.

The Japanese patent application JP 2008077974 A discloses electrodes for fuel cells in which the catalyst particles and the conductive carrier of the electrode catalyst layer are covered with a chemical compound consisting of nitrogen-containing 6 membered rings.

US patent application publication US 20050136308 A1 discloses a MEA comprising an anode and a cathode fluid diffusion layer, an ion-exchange membrane (preferably Nation^{®}) interposed between said fluid diffusion layers, and an anode catalyst layer and a cathode catalyst layer interposed between the ion-exchange membrane and the respective fluid diffusion layer. At least one of the ion-exchange membrane, the cathode catalyst layer and the anode catalyst layer non- uniformly supports at least one additive selected from a radical scavenger, a membrane cross- linker, a hydrogen peroxide decomposition catalyst and a hydrogen peroxide stabilizer. Among the additives used as hydrogen peroxide decomposition catalysts metal complexes of multidentate N-donor ligands such as phenanthroline are mentioned.

The Japanese patent application JP 2008288097 A discloses similar MEA as the afore-mentioned US 20050136308 A1, but with the difference that a hydrocarbon based ionomer is used. No nitrogen containing heterocycle is mixed to that hydrocarbon ionomer, but a nitrogen containing heterocycle is covalently attached to the main chain of the hydrocarbon ionomer, instead.

The international application WO 2007144633 A1 discloses an ion-conducting membrane comprising a polymer component (such as a perfluorinated sulfonic acid polymer) and a macrocyclic N-containing compound. The macrocyclic compound is chosen from the group consisting of phthalocyanines, porphyrins and tetraazaannulenes and is functionalized with one or more ion-conducting groups. The macrocyclic N-containing compounds contribute to the ionic conductivity of the membrane. Complexation of metal ions by the macrocyclic N-containing compounds within the membrane is not disclosed.

US patent application publication US 20060083976 A1 describes a polymer electrolyte membrane for a fuel cell comprising a proton- conducting polymer such as Nation^{®} and a nitrogen containing heterocycle substituted with an electron-withdrawing substituent, preferably a fluorinated imidazole or a benzimidazole compound. Chelate ligands or metal ligand complexes or coordination compounds are not disclosed.

US patent application publication US 20060280982 A1 discloses a membrane-electrode assembly for solid polymer electrolyte fuel cells, comprising an anode electrode, a cathode electrode, and a solid polymer electrolyte membrane, the electrodes being disposed on opposite sides of the solid polymer electrolyte membrane, wherein the solid polymer electrolyte membrane contains a polyarylene having sulfonic acid group and a nitrogen-containing heterocyclic aromatic compound. Chelate ligands are not disclosed. Metal ligand complexes or coordination compounds are disclosed as catalysts for a polymerization reaction, but not as additives to a proton exchange membrane.

The Japanese patent application JP 04136040 A discloses a cation exchange membrane comprising a fluorocarbon resin having at least either a sulfonyl group or a trifluoroacetic acid group at the terminal of the side chain and containing a terpyridine ligand-transition metal complex. Uncomplexed chelate ligands for use as additives in proton exchange membranes are not disclosed.

The international application WO 2004040685 A2 discloses a reinforced polymer membrane comprising at least one polymer layer based on at least one polymer with acidic properties and at least one organic reinforcing material layer having basic properties, as well as the use of such reinforced polymer membranes in polymer electrolyte membrane fuel cells. The polymer with acidic properties is preferably a perfluorinated membrane having sulfonic acid groups, such as Nation^{®}, and the reinforcing material is made of a polymer, copolymer or polymer blend having basic groups like nitrogen-containing 5- or 6-membered heterocycles. The nitrogen-containing 5- or 6-membered heterocycles are no chelate ligands and are blocked in the membrane by electrostatic interactions with corresponding acidic properties.

US patent application publication US 20060199062 A1 discloses a solid polymer electrolyte membrane which is produced by a method comprising a first step consisting in the preparation of a polymer electrolyte-containing solution by dissolving a perfluorocarbonsulfonic acid resin having an ion-exchange capacity of 0.5 to 3.0 meq/g, a polyazole-based compound and an alkali metal hydroxide in a protic solvent to prepare a polymer electrolyte- containing solution, and a second step consisting in forming a membrane from said solution. According to a preferred embodiment, a reinforcing material in the form of a porous (non-woven) fabric or fibers is further added to the membrane. The polyazole-based compounds are no chelate ligands, so that they are not able to form stable complexes with metal ion impurities in a proton exchange membrane.

The Japanese patent application JP 2006269266 A also describes solid composite polyelectrolyte membranes having a reinforcement material (preferably PTFE), said membranes being composed of a mixture of a perfluorosulfonic acid, such as Nation^{®}, with a basic polymer such as polybenzimidazole (PBI). Polybenzimidazole, however, is not a chelate ligand, so that it is not able to form a stable complex with metal ion impurities in a proton exchange membrane.

The international application WO 2008025465 A1 discloses a polymer electrolyte membrane (PEM) made from perfluorosulfonic acid polymers (preferably Nation^{®}), comprising at least one oxidation protection agent and additives. The described PEM is preferably an acid/ base polymer blend which forms acidic and basic domains, the basic polymer being formed by polybenzimidazole (PBI) and the at least one oxidation protection agent being formed by manganese oxide. Polybenzimidazole, however, is not a chelate ligand, so that it is not able to form a stable complex with metal ion impurities in a proton exchange membrane.

R. Wycisk et al., Journal of Power Sources 163 (2006) 9-17, describe proton-conducting membranes for a direct methanol fuel cell, which are fabricated from Nafion^{®}-PBI blends by solution casting. Polybenzimidazole, however, is not a chelate ligand, so that it is not able to form a stable complex with metal ion impurities in a proton exchange membrane.

The international application WO 2005072413 A2 discloses polymers or polymer precursors having at least one heterocycle and being useful for fabrication of proton-exchange membranes (PEMs). In representative examples, the heterocycle is a fluorinated imidazole ring or a triazole ring, or any other nitrogen-containing heterocycle, and the polymers are preferably mixed with acid-group containing (co)polymers, such as perfluorosulfonic acid, to enhance the proton conductivity of the membranes in low humidity environments.

What is needed is an improved additive technology that provides additional resistance of MEAs, and specifically PFSA membranes of the MEAs, to degradation, resulting in improved MEA durability and performance under low RH in a fuel cell.

### SUMMARY

Provided is a small molecule or polymer additive that can be used in preparation of a composite PFSA membrane to improve durability and performance under low RH in a fuel cell. In particular, a water insoluble small molecule or polymer containing at least two nitrogen atoms (e.g., -NH-, -N=, or both -NH- and -N= groups) can be used in the preparation of composite proton exchange membranes (PEMs).

Specifically, provided is a method of forming a membrane electrode assembly comprising a proton exchange membrane and electrode, the method comprising providing an additive comprising at least two nitrogen atoms to the membrane electrode assembly, where the additive can form a complex with a metal ion. Providing the additive to the membrane electrode assembly comprises incorporating the additive into the membrane. The membrane is a perfluorosulfonic acid membrane or a hydrocarbon ionomer membrane.

Further, provided is a proton exchange membrane for a membrane electrode assembly comprising perfluorosulfonic acid or a hydrocarbon ionomer, and an additive, wherein the additive is an uncomplexed chelate ligand having at least two nitrogen atoms which can act as coordination sites, so that the uncomplexed additive in the finished proton exchange membrane is available to form chelate complexes with metal ions in the membrane.

### BRIEF DESCRIPTION OF THE FIGURES OF THE DRAWINGS

Fig. 1 illustrates a scheme depicting the degradation of a membrane in a fuel cell.
Fig. 2 shows exemplary small molecular additives according to the present disclosure.
Figs. 3 and 4 show exemplary polymer additives according to the present disclosure.
Fig. 5 shows a complex of 2,2'-Bipyridine and a Fe³⁺ ion.
Fig. 6 illustrates a scheme of proton dissociation by a complex.
Fig. 7 illustrates a scheme of grafting complex forming units (*i.e.,* ligands) to a polymer for Ru³⁺ capture.
Fig. 8 illustrates an exemplary perfluoro backbone including an additive according to the present disclosure.
Fig. 9 is a graph of fluorine release rates of various membranes.
Figs. 10 and 11 are graphs of polarization curves of various membranes at 95°C, 95% relative humidity and 30% relative humidity, respectively.
Fig. 12 shows results of open circuit voltage tests and fluorine release rates of various MEAs.
Fig. 13 is an Fourier transform infrared spectroscopy (FTIR) spectra of various membranes.

### DETAILED DESCRIPTION

The presently disclosed additives, which can be used in the membrane to protect the membrane from hydroxyl radical attack, are selected based on a high reactive rate with hydroxyl radicals, less impact on fuel cell performance than has been observed with most metal oxide radical scavengers, and low water washability.

The additive can be incorporated into the membrane by mixing, for example, a perfluorosulfonic acid ionomer dispersion or a hydrocarbon ionomer solution with an additive to provide an additive and ionomer solution. A membrane is then cast from the mixture solution.

Accordingly, provided is a method of protecting a proton exchange membrane of a membrane electrode assembly from hydroxyl radical attack comprising forming a membrane electrode assembly according to the above-mentioned method.

The presently disclosed additives contain at least two nitrogen atoms for formation of a complex with metal ions. The additive, which can be added into the membrane or ionomer, is a water insoluble organic molecule or a polymer with functional groups which can coordinate with metal ions that exist in the membrane or the metal ions formed during fuel cell operation, rather than being a complex of metal ion or oxide. The additive is soluble in a PFSA ionomer dispersion.

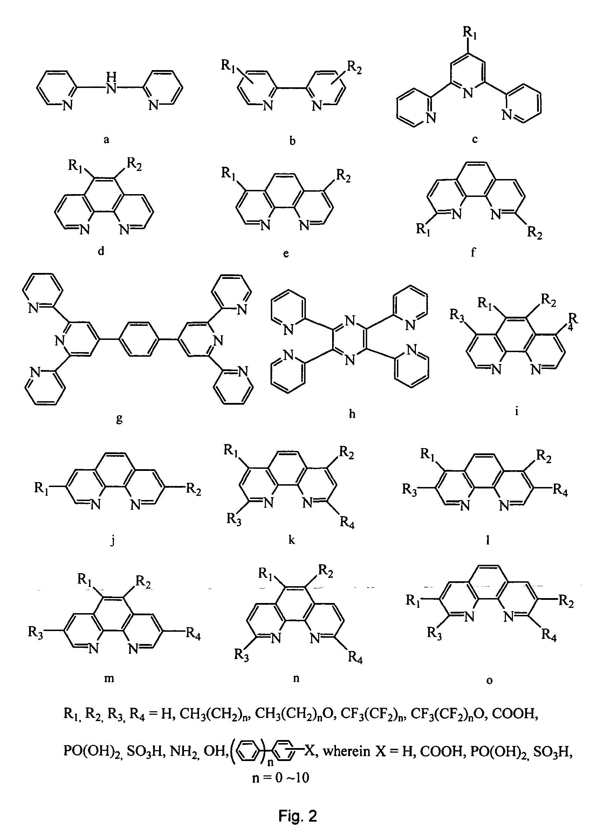

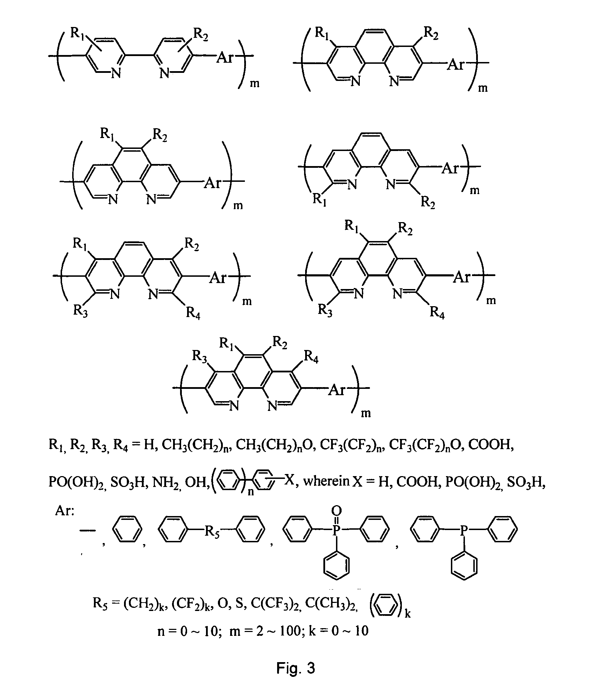

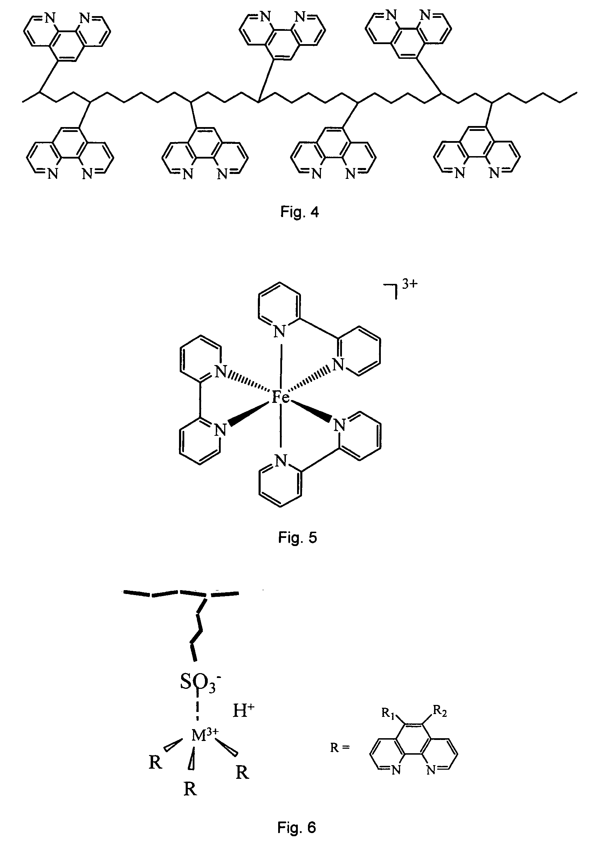

The additive can be a small molecule or polymer which contains units to form a complex with metal ions. As examples, the chemical structure of small molecular additives such as dipyridylamine, dipyridyl, phenanthroline, terpyridine, 4'-4""-(1,4-phenylene)bis(2,2':6',2"-terpyridine), tetra-2-pyridinylpyrazine and their derivatives are shown in Fig. 2. With regard to polymer additives, the complex forming units can be either on the polymer backbone (Fig. 3) or on side chains (Fig. 4). The additives can be homopolymers of complex forming units or copolymers of complex forming units with an aromatic structure (such as poly(ether ketone), poly(ether sulfone), poly(phenylene), etc) (Fig. 3). copolymers can be random or block copolymers. When a complex forming unit is on the polymer side chain, it can be directly attached to the polymer backbone or attached via a spacer. The polymer backbone can be an aromatic, semi- or perfluoro aliphatic polymer. On each side chain, there can be one complex forming unit or multiple complex forming units. In Figs. 2 and 3, n = 0-10, and in Fig. 3, m = 2-100, k = 0-10.

When incorporated into a membrane, the additive can be present in an amount of about 0.01 to 10 weight%, for example, from about 0.5 to 2.0 weight%, based on weight of the membrane.

The presently disclosed additives have multiple functions. First, the additives can form complexes with metal ion impurities in the membrane or ionomer. The metal ions could come from, for example, processing of ionomer synthesis and membrane fabrication or from humidity water streams, Gas Diffusion Layer (GDL), or bipolar plates during fuel cell operation. The metal ions react with hydrogen peroxide (produced during fuel cell operation) to generate free radicals to degrade the membrane. After forming a complex with the additive, the metal ions are inactivated. Therefore, less or even no free radicals will be generated. It has been proven that metal ion chelating agents can reduce generation of free radicals in a Fenton like reaction. (See The Journal of Biological Chemistry, 1984, 259(6): 3620-3624). Second, the additive itself is a free radical scavenger, and the formed complex with the metal ion becomes an even better free radical scavenger. For example, the reaction rate of 2,2'-bipyridine with hydroxyl free radical is 6.2 x 10⁹ L mol⁻¹ s⁻¹ (Int. J. Radiat. Phys. Chem. 1971, 3: 259-272), while the reaction rate of tris(2,2'-bipyridyl) iron(III) ion (see Fig. 5) with hydroxyl free radical is 1.0 x 10¹⁰ L mol⁻¹ s⁻¹ (J. Chem. Soc., Dalton Trans., 1982, 1953-1957). Said tris(2,2'-bipyridyl) iron(III) complex illustrated in Fig. 5 may be one possible reaction product of an additive according to the present invention with an undesirable metal impurity such as Fe³⁺ ions. In fact, occurrence of Fe³⁺ or Fe²⁺ ions within a fuel cell is likely, because this kind of impurity may be created during undesirable corrosion processes of iron containing parts of the fuel cell. Such complexes are formed when said additives, in the illustrated case 2,2'-bipyridine, are incorporated into the membrane of the membrane electrode assembly and, e.g. during operation, complex ingressing metal impurities, in the illustrated case Fe³⁺. Third, the complex of a complex forming unit with a metal ion can oxidize hydrogen peroxide to produce H₂O and O₂ in a non-Fenton chemistry (D.H. Macartney, Can J Chem 1986, 64: 1936-1942; I.A. Salem, M El-maazawi, A.B. Zaki, International Journal of Chemical Kinetics, 2000, 32(11): 643-666). Therefore, hydrogen peroxide produced during fuel cell operation is decomposed by the complex without generation of free radicals.

Furthermore, the cobalt, ruthenium and platinum metals or alloys used as anode or cathode catalysts can dissolve into ionomers under an electric field in the acidic environment during fuel cell operation, especially, in start up-shut down process or cell voltage reversal due to fuel starvation. Ruthenium dissolved in anode and crossover to cathode is a serious issue that can cause performance loss due to lowering of Pt surface catalysis activity.

Complex forming units according to the present disclosure can bond to metals, for example, cobalt, ruthenium or platinum, to form coordinate complexes. These complexes are highly active with regard to decomposition of hydrogen peroxide to produce water. These complexes, particularly a complex containing platinum, can also catalyze the reaction of hydrogen with oxygen to produce water. Therefore, the complexes formed in the ionomer layer and membrane can function as catalysts that catalyze hydrogen and oxygen from crossover to produce water in the membrane to make it self-humidifying.

Without wishing to be bound by any theories, it is believed that the complexes can also provide a static electric field force to dissociate protons when there are not enough water molecules (less than three molecules per SO₃⁻ group) in the membrane under dry condition. Therefore, the hydrogen atoms, which bond to an SO₃⁻ group via a hydrogen bond, can be dissociated to be a proton and transport through the membrane to improve the conductivity under dry conditions.

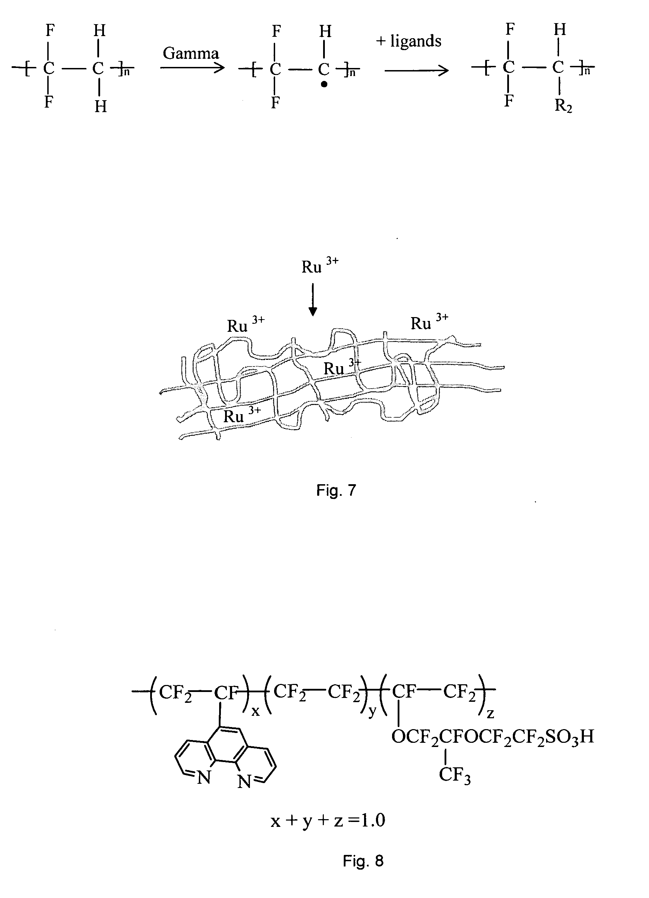

To prevent ruthenium crossover from anode to cathode, the complex forming units can (1) be chemically bond to a polymer backbone, as shown in Fig. 6, and then be added into a membrane, and/or (2) be grafted onto the surface of porous polymer reinforcement materials, such as, for example, polyvinylidene fluoride (PVDF) nanofiber porous film, as shown in Fig. 7. The grafting of complex forming units onto PVDF can be through radical reaction created by radiation. The PVDF layer with a surface modified by grafting complex forming units is chemically inert and immobile. Ru³⁺ can be trapped via coordinating with the complex forming units (*i.e.,* ligands) within this layer as shown in Fig. 7.

The presently disclosed additives can be used with PFSA or hydrocarbon ionomers in dense proton conducting membranes, as well as together with a PFSA membrane or hydrocarbon ionomer and a porous polymer matrix in a reinforcement proton conducting membrane. In particular, the polymer matrix can comprise the presently disclosed additive, the additive being an uncomplexed chelate ligand having at least two nitrogen atoms or chemical units comprising at least two nitrogen atoms, the at least two nitrogen atoms being able to act as coordination sites, so that the uncomplexed additive in the finished proton conducting membrane is available to form chelate complexes with metal ions in the membrane.

The porous matrix can comprise, for example, PTFE (polytetrafluoroethylene), PVDF (polyvinylidene fluoride), P(VDF-HFP) (poly(vinylidenefluoride-co-hexafluoropropylene)), poly(ethylene), poly(propylene), poly(ethylene-co-propylene), poly(ether sulfone), poly(ether ketone), poly(imide), and/or poly(benzimidazole). Furthermore, the porous polymer matrix can comprise a polymer selected from the group consisting of sulfonated polytetrafluoroethylene, sulfonated polyvinylidene fluoride, sulfonated poly(vinylidenefluoride-co-hexafluoropropylene), sulfonated poly(ethylene), sulfonated poly(propylene), sulfonated poly(ethylene-co-propylene), sulfonated poly(ether ketone), sulfonated poly(ether sulfone), sulfonated poly(imide), sulfonated poly(benzimidazole), and combinations thereof. In another embodiment, the porous polymer matrix can comprise a polymer selected from the group consisting of phosphonated polytetrafluoroethylene, phosphonated polyvinylidene fluoride, phosphonated poly(vinylidenefluoride-co-hexafluoropropylene), phosphonated poly(ethylene), phosphonated poly(propylene), phosphonated poly(ethylene-co-propylene), phosphonated poly(ether ketone), phosphonated poly(ether sulfone), phosphonated poly(imide), phosphonated poly(benzimidazole), and combinations thereof. The porous matrix can be modified to bear one or more functional groups, such as, for example, the above-described complex forming units and/or proton carriers (e.g., sulfonic acid, phosphonic acid, sulfonimide, carboxylic acid, and/or sulfonamide).

Also provided is a reinforcement proton conducting membrane comprising:
a perfluorosulfonic acid with an additive or a hydrocarbon ionomer with an additive, and a porous polymer matrix, wherein the additive is an uncomplexed chelate ligand having at least two nitrogen atoms which can act as coordination sites, so that the uncomplexed additive in the finished proton conducting membrane is available to form chelate complexes with metal ions in the membrane.

Moreover, a reinforcement proton conducting membrane is provided comprising:
a perfluorosulfonic acid with an additive or a hydrocarbon ionomer with an additive; and a porous polymer matrix comprising an additive; wherein the additive is an uncomplexed chelate ligand having at least two nitrogen atoms which can act as coordination sites, so that the uncomplexed additive in the finished proton conducting membrane is available to can form chelate complexes with metal ions in the membrane.

Additionally, provided is a fuel cell comprising a proton conducting membrane and at least one electrode, wherein the proton conducting membrane comprises a perfluoro backbone or hydrocarbon ionomer comprising the presently disclosed additive (*i.e.,* comprising at least two nitrogen atoms). A monomer bearing one or more complex forming units can be used to synthesize fluoro or hydrocarbon ionomers for a proton conducting polymer. An exemplary perfluoro backbone including an additive comprising two nitrogen atoms is illustrated in Fig. 8.

The membrane electrode assembly can be fabricated in any conventional manner. It is preferred, however, that the assembly is fabricated by bonding a proton conducting membrane with the cathode, anode, or both electrodes; or by bonding a catalyst coated membrane with a gas diffusion layer.

The following illustrative examples are intended to be non-limiting.

### EXAMPLES

A comparative MEA was formed using a chemical stabilized DuPont^{™} Nafion^{®} PFSA NRE211 membrane (without additive, hereinafter "NRE211"), bonded with two gas diffusion electrodes. Exemplary MEAs were formed by mixing additives into a PFSA ionomer solution, from which a membrane was cast and bonded with two gas diffusion electrodes. The additives were 5 weight% (of membrane) of the small molecule illustrated as a in Fig. 2 (hereinafter referred to as "A1"); 5 weight% (of membrane) of the small molecule illustrated as b in Fig. 2 (when R₁ = R₂ = H, hereinafter referred to as "A2"); and 1 weight% (of membrane) of 1-10-phenanthroline (d in Fig. 2 when R₁ = R₂ = H, hereinafter referred to as "A4 additive"). Membrane chemical degradation rate in an open circuit voltage (OCV) test at 95°C and 30% RH was characterized by fluorine release rate (FRR) in cathode and/or anode outlet water and OCV lifetime.

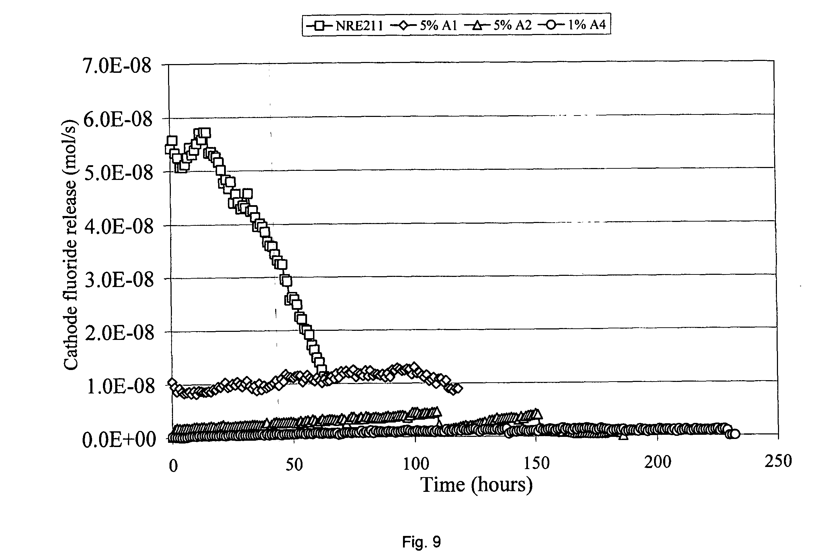

In particular, Fig. 9 shows FRRs of the comparative membrane and three exemplary membranes described above. As shown in Fig. 9, the FRR of each of the three exemplary membranes was lower than that of NRE211. A4 additive was found to be more efficient than A1 additive or A2 additive in reducing membrane chemical degradation, as the membrane with 1 weight% A4 additive had a lower FRR than the membrane with 5 weight% A1 additive or the membrane with 5 weight% A2 additive.

Table 1 provides OCV lifetime results of monolithic membranes with different additives.

**Table 1**

| Membrane | 1 wt.% A4 | 5 wt.% A1 | 5 wt.% A2 | NRE211 |
|---|---|---|---|---|
| OCV lifetime (hours) | 230 | 119 | 186 | 66 |

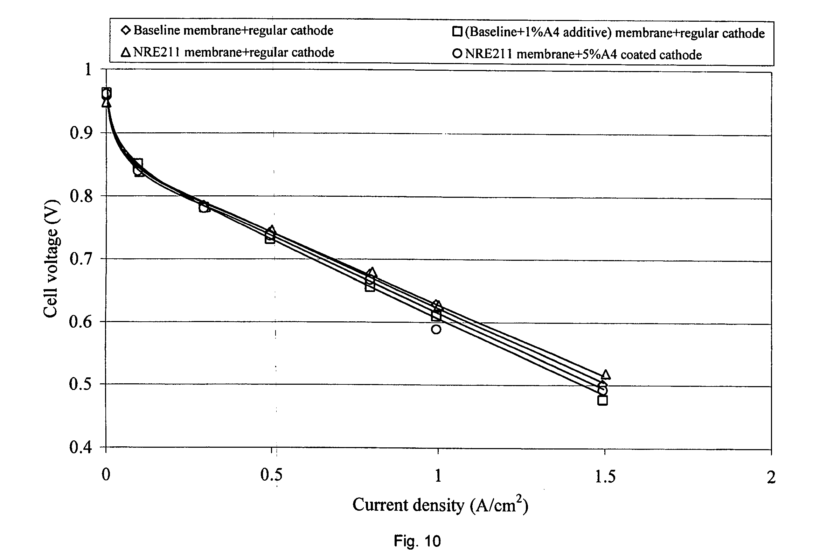

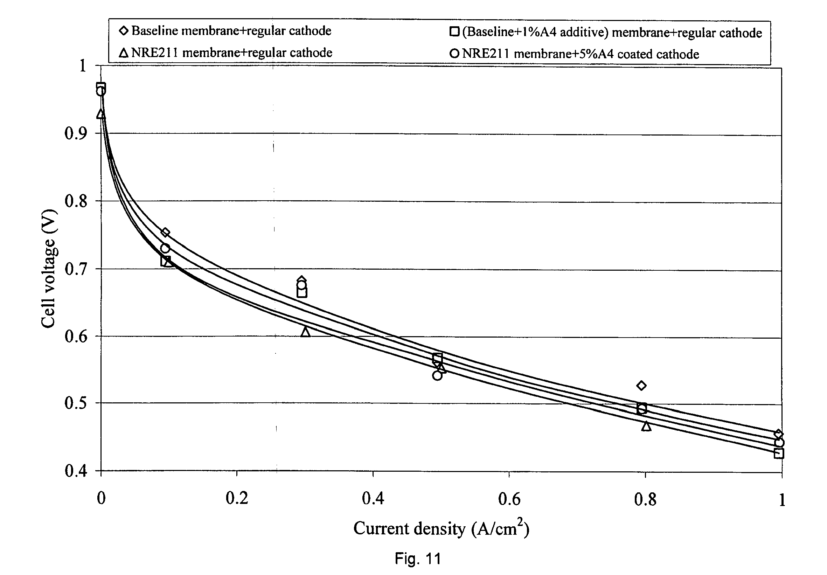

While the OCV lifetime of the 1 wt.% A4 membrane was approximately 4 times longer than that of NRE211, as shown in Table 1, performance of the membrane with A4 additive was only slightly lower than a "Baseline" membrane without additive (due to the strong interaction of additive with SO₃H, resulting in slightly lower conductivity), as shown in Figs. 10 and 11, which are graphs of polarization curves of various membranes at 95°C, 95% relative humidity and 30% relative humidity, respectively.

In Figs. 10 and 11, "Baseline" refers to a cast PFSA membrane, while "Baseline ionomer + 1 wt.% A4 additive" refers to a "Baseline" cast PFSA membrane with 1 weight% A4 additive. Both membranes were bonded with two GDEs with Pt loading of 0.7 mg/cm² in the cathode and 0.3 mg/cm² in the anode to make MEAs. NRE211 was bonded with the same GDEs to make another comparative MEA, while an MEA with NRE211 bonded to the same anode, but with a cathode that had catalyst with 5 weight% A4 additive in the ionomer coated on a GDL was also formed. In the 5 weight% A4 coated cathode, 5 weight% is the weight percentage of additive to (ionomer + additive). In the process for preparation of the 5 weight% A4 coated cathode, 5 weight% A4 additive was dissolved in an ionomer dispersion, and then the ionomer dispersion containing 5 weight% additive was mixed with catalyst to make ink, which was spray coated on a GDL to make a GDE.

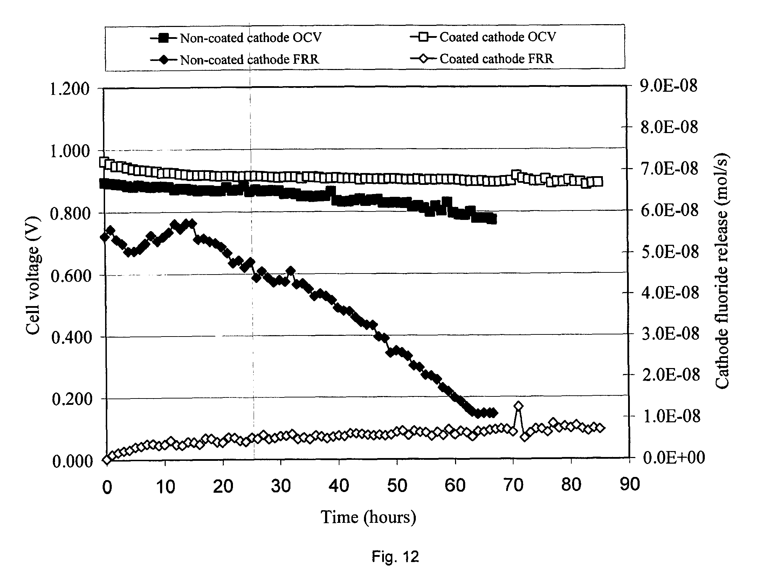

Regarding the effect of A4 additive on performance and stability of catalyst, while an MEA containing NRE211 and a cathode coated with PFSA ionomer containing 5 weight% A4 additive showed only slightly lower performance than the "Baseline" MEA of Figs. 10 and 11, an MEA with a coated cathode had a much lower FRR than an MEA with a non-coated cathode, as demonstrated in Fig. 12, which shows results of open circuit voltage tests and fluorine release rates of MEAs with NRE211 and a coated or non-coated cathode.

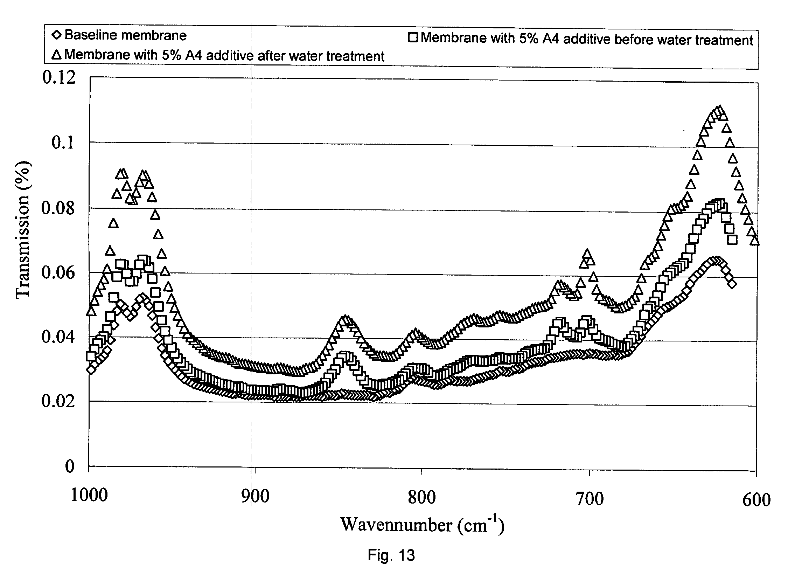

While the additive has strong interactions with PFSA membranes, the additive is water insoluble. As shown in Fig. 13, when a 0.2 g membrane containing 5 weight% A4 additive was soaked in 300 mL water at 80°C for 70 hours, there was no evidence of additive concentration decrease from infrared (IR) measurement.

Thus, the presently claimed method, proton exchange membrane, and membrane electrode assembly provide for reduced MEA degradation, as evidenced by FRR and OCV lifetime results. The presently disclosed additives efficiently reduce chemical degradation of ionomer in the membrane. Consequently, not only is membrane durability increased, but stability of catalyst in the electrode is also increased.

## Claims

1. A method of forming a membrane electrode assembly comprising a proton exchange membrane and electrodes, the method comprising:
incorporating an additive into the proton exchange membrane of the membrane electrode assembly, comprising a step of mixing the additive with the proton exchange membrane material,
wherein the additive is an uncomplexed chelate ligand having at least two nitrogen atoms which can act as coordination sites, so that the uncomplexed additive in the finished proton exchange membrane is available to form chelate complexes with metal ion impurities in the membrane, and
wherein the membrane is a perfluorosulfonic acid membrane or a hydrocarbon ionomer membrane.

2. The method of claim 1, wherein the additive is selected from the group consisting of small molecules, polymers, or combinations thereof.

3. The method of claim 1, wherein the additive is a small molecule selected from the group consisting of: 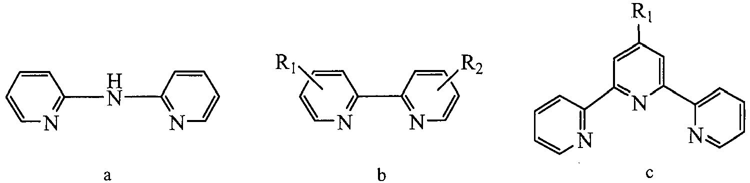 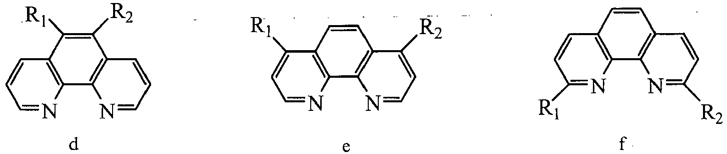 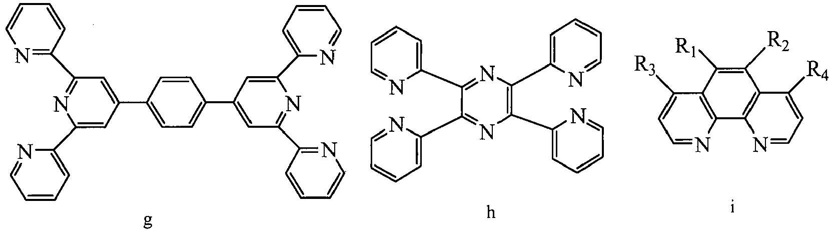 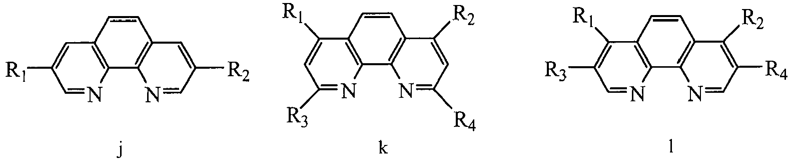 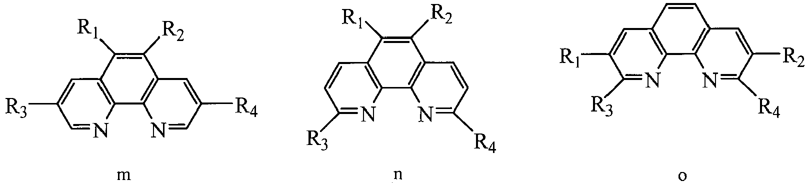
wherein R₁, R₂, R₃ and R₄ are independently selected from the group consisting of
H, CH₃(CH₂)ₙ, CH₃(CH₂)ₙO, CF₃(CF₂)ₙ, CF₃(CF₂)ₙO, COOH, PO(OH)₂,
SO₃H, NH₂, OH, 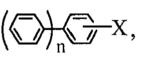 wherein X = H, COOH, PO(OH)₂, SO₃H,
and n = 0 - 10.

4. The method of claim 1, wherein the additive is a polymer and the at least two nitrogen atoms are on a backbone of the polymer.

5. The method of claim 4, wherein the additive is selected from the group consisting of: 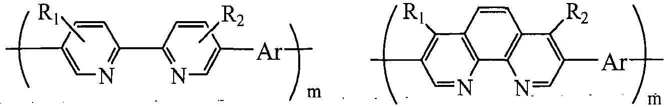 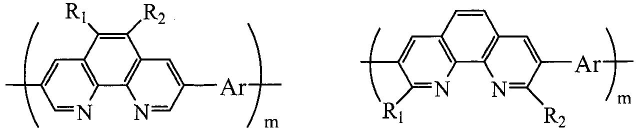 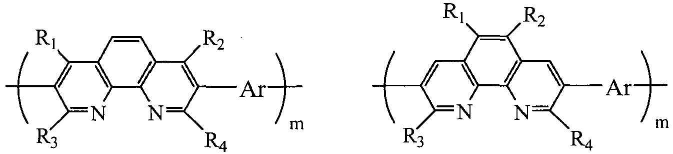 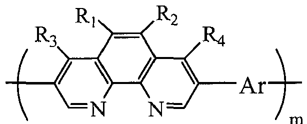
wherein m = 2 - 100,
and R₁, R₂, R₃ and R₄ are independently selected from the group consisting of:
_{H}, CH₃(CH₂)ₙ, CH₃(CH₂)ₙO, CF₃(CF₂)ₙ, CF₃(CF₂)ₙO, COOH, PO(OH)₂, SO₃H, NH₂ OH, 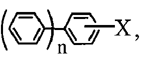 , wherein X = H, COOH, PO(OH)₂, SO₃H, and Ar is selected from the group consisting of: 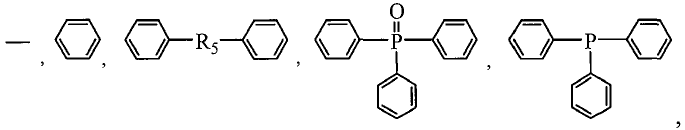
and R₅ is selected from the group consisting of:
R₅ = (CH₂)ₖ, (CF₂)ₖ, O, S, C(CF₃)₂, C(CH₃)₂, 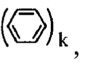 and n, k = 0 - 10.

6. The method of claim 1, wherein the additive is a polymer and the at least two nitrogen atoms are on one or more side chains of the polymer.

7. A membrane electrode assembly formed according to the method of claim 1.

8. The membrane electrode assembly of claim 7, wherein the membrane electrode assembly is fabricated by bonding a proton conducting membrane with the cathode and anode electrodes.

9. The membrane electrode assembly of claim 7, wherein the membrane electrode assembly is fabricated by bonding a catalyst coated membrane with a gas diffusion layer.

10. A method of protecting a proton exchange membrane of a membrane electrode assembly from hydroxyl radical attack comprising forming a membrane electrode assembly according to the method of claim 1.

11. The method of claim 1, wherein incorporating the additive into the membrane comprises:
mixing a perfluorosulfonic acid ionomer dispersion or hydrocarbon ionomer solution with an additive comprising at least two nitrogen atoms to provide an ionomer and additive mixture solution; and
casting a membrane from the ionomer and additive mixture solution.

12. A proton exchange membrane for a membrane electrode assembly comprising:
perfluorosulfonic acid or a hydrocarbon ionomer; and
an additive; wherein the additive is an uncomplexed chelate ligand having at least two nitrogen atoms which can act as coordination sites, so that the uncomplexed additive in the finished proton exchange membrane is available to form chelate complexes with metal ions in the membrane.

13. The membrane of claim 12, wherein the additive is selected from the group consisting of small molecules, polymers, or combinations thereof.

14. The membrane of claim 12, wherein the additive is present in an amount of about 0.01 to 10 weight% of the membrane.

15. The membrane of claim 12, wherein the additive is present in an amount of about 0.5 to 2.0 weight% of the membrane.

16. A reinforcement proton conducting membrane comprising:
a perfluorosulfonic acid or a hydrocarbon ionomer; and
a porous polymer matrix;
wherein the porous polymer matrix comprises an additive, the additive being an uncomplexed chelate ligand having at least two nitrogen atoms or chemical units comprising at least two nitrogen atoms, the at least two nitrogen atoms being able to act as coordination sites, so that the uncomplexed additive in the finished proton conducting membrane is available to form chelate complexes with metal ions in the membrane.

17. A reinforcement proton conducting membrane comprising:
a perfluorosulfonic acid with an additive or a hydrocarbon ionomer with an additive, and a porous polymer matrix, wherein the additive is an uncomplexed chelate ligand having at least two nitrogen atoms which can act as coordination sites, so that the uncomplexed additive in the finished proton conducting membrane is available to form chelate complexes with metal ions in the membrane.

18. A reinforcement proton conducting membrane comprising:
a perfluorosulfonic acid with an additive or a hydrocarbon ionomer with an additive; and a porous polymer matrix comprising an additive; wherein the additive is an uncomplexed chelate ligand having at least two nitrogen atoms which can act as coordination sites, so that the uncomplexed additive in the finished proton conducting membrane is available to form chelate complexes with metal ions in the membrane.

19. The reinforcement proton conducting membrane of one of claims 16 - 18, wherein the porous polymer matrix comprises a polymer selected from the group consisting of polytetrafluoroethylene, polyvinylidene fluoride, poly(vinylidenefluoride-co-hexafluoropropylene), poly(ethylene), poly(propylene), poly(ethylene-co-propylene), poly(ether sulfone), poly(ether ketone), poly(imide), poly(benzimidazole), and combinations thereof.

20. The reinforcement proton conducting membrane of one of claims 16 - 18, wherein the porous polymer matrix comprises a polymer selected from the group consisting of sulfonated polytetrafluoroethylene, sulfonated polyvinylidene fluoride, sulfonated poly(vinylidenefluoride-co-hexafluoropropylene), sulfonated poly(ethylene), sulfonated poly(propylene), sulfonated poly(ethylene-co-propylene), sulfonated poly(ether ketone), sulfonated poly(ether sulfone), sulfonated poly(imide), sulfonated poly(benzimidazole), and combinations thereof.

21. The reinforcement proton conducting membrane of one of claims 16 - 18, wherein the porous polymer matrix comprises a polymer selected from the group consisting of phosphonated polytetrafluoroethylene, phosphonated polyvinylidene fluoride, phosphonated poly(vinylidenefluoride-co-hexafluoropropylene), phosphonated poly(ethylene), phosphonated poly(propylene), phosphonated poly(ethylene-co-propylene), phosphonated poly(ether ketone), phosphonated poly(ether sulfone), phosphonated poly(imide), phosphonated poly(benzimidazole), and combinations thereof.

22. A membrane electrode assembly comprising:
a proton conducting membrane; and
at least one electrode;
wherein the proton conducting membrane comprises a perfluoro backbone or hydrocarbon ionomer comprising chemical units to form chelate complexes with metal ions, wherein the chemical units comprise at least two nitrogen atoms which can act as coordination sites, so that the uncomplexed chemical units in the finished proton conducting membrane are available to form chelate complexes with metal ions in the membrane.

23. The membrane electrode assembly of claim 22, wherein the membrane electrode assembly is fabricated either by bonding electrodes with proton conducting membrane or by bonding a catalyst coated membrane with a gas diffusion layer.

## Patentansprüche

1. Verfahren zur Herstellung einer Membranelektrodenanordnung umfassend eine Protonenaustauschmembran und Elektroden, wobei das Verfahren Folgendes umfasst:
Einbringung eines Additivs in die Protonenaustauschmembran der Membranelektrodenanordnung, umfassend einen Schritt, bei dem das Additiv mit dem Protonenaustauschmembran-Material gemischt wird,
wobei das Additiv ein nicht komplexierter Chelat-Ligand mit mindestens zwei Stickstoffatomen ist, die als Koordinierungsstellen fungieren können, so dass das nicht komplexierte Additiv in der fertigen Protonenaustauschmembran zur Verfügung steht, um mit den Metallionen-Verunreinigungen in der Membran Chelatkomplexe zu bilden, und
wobei die Membran eine Perfluorsulfonsäure-Membran oder eine Kohlenwasserstoffionomer-Membran ist.

2. Verfahren nach Anspruch 1, wobei das Additiv aus einer Gruppe ausgewählt wird, die kleine Moleküle, Polymere oder Kombinationen hiervon umfasst.

3. Verfahren nach Anspruch 1, wobei das Additiv ein kleines Molekül ist, das aus einer Gruppe ausgewählt wird, die Folgendes umfasst: 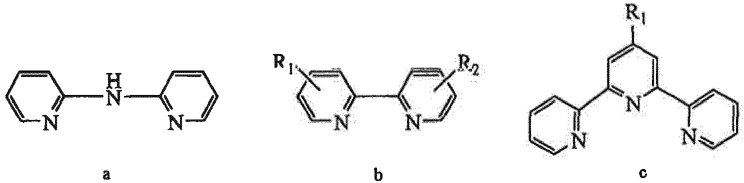 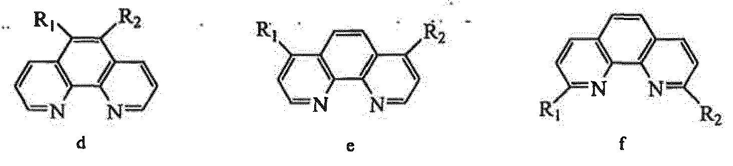 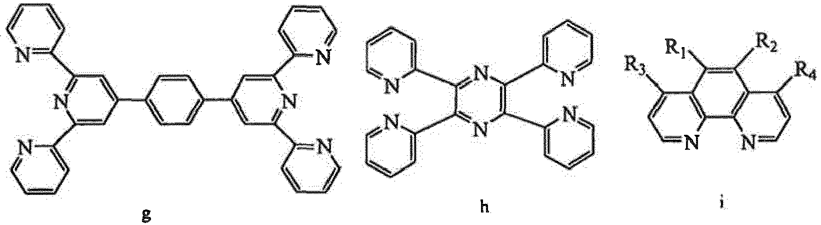 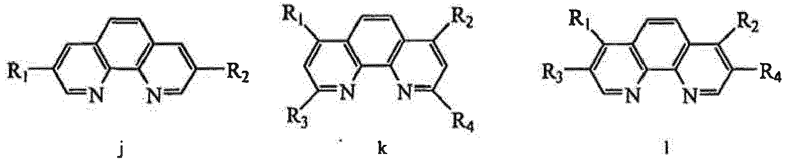 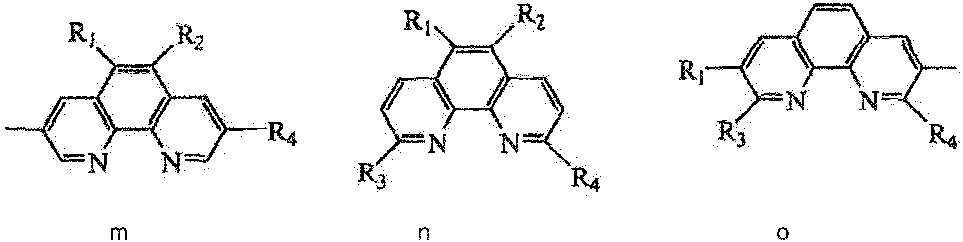
wobei R₁, R₂, R₃ und R₄ unabhängig aus einer Gruppe ausgewählt werden, die Folgendes umfasst:
H, CH₃(CH₂)ₙ, CH₃(CH₂)ₙO, CF₃(CF₂)ₙ,CF₃(CF₂)ₙO, COOH, PO(OH)₂, SO₃H, NH₂, OH, 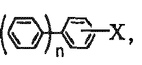 wobei X = H, COOH, PO(OH₂), SO₃H, und n = 0 - 10.

4. Verfahren nach Anspruch 1, wobei das Additiv ein Polymer ist und sich die mindestens zwei Stickstoffatome an einem Rückgrat des Polymers befinden.

5. Verfahren nach Anspruch 4, wobei das Additiv aus einer Gruppe ausgewählt wird, die Folgendes umfasst: 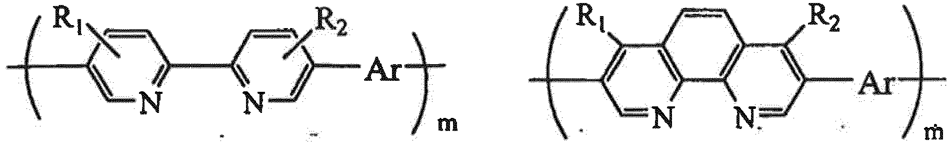 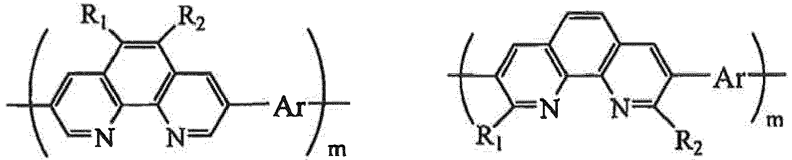 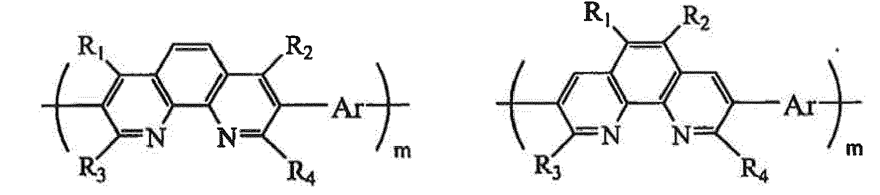 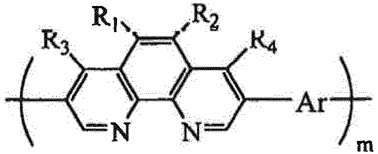
wobei m = 2 -100,
und R₁, R₂, R₃ und R₄ unabhängig aus einer Gruppe ausgewählt werden, die Folgendes umfasst:
H, CH₃(CH₂)ₙ, CH₃(CH₂)ₙO, CF₃(CF₂)ₙ, CF₃(CF₂)ₙO, COOH, PO(OH)₂, SO₃H, NH₂, OH, 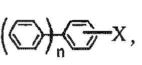 wobei X = H, COOH, PO(OH₂), SO₃H,
und Ar aus einer Gruppe ausgewählt wird, die Folgendes umfasst: 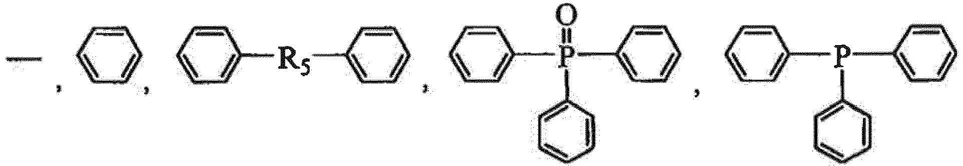
und R₅ aus einer Gruppe ausgewählt wird, die Folgendes umfasst:
R₅ = (CH₂)ₖ, (CF₂)ₖ, O, S, C(CF₃)₂, C(CH₃)₂, 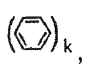
und n, k=0 - 10.

6. Verfahren nach Anspruch 1, wobei das Additiv ein Polymer ist und sich die mindestens zwei Stickstoffatome auf einer oder mehreren Seitenketten des Polymers befinden.

7. Membranelektrodenanordnung ausgebildet nach dem Verfahren nach Anspruch 1.

8. Membranelektrodenanordnung nach Anspruch 7, wobei die Membranelektrodenanordnung durch Verbonden einer protonenleitenden Membran mit den Kathoden- und Anodenelektroden hergestellt wird.

9. Membranelektrodenanordnung nach Anspruch 7, wobei die Membranelektrodenanordnung durch Verbonden einer katalysatorbeschichteten Membran mit einer Gasdiffusionsschicht hergestellt wird.

10. Verfahren zum Schutz einer Protonenaustauschmembran einer Membranelektrodenanordnung vor dem Angriff durch Hydroxylradikale, umfassend die Ausbildung einer Membranelektrodenanordnung nach dem Verfahren nach Anspruch 1.

11. Verfahren nach Anspruch 1, wobei die Einbringung des Additivs in die Membran Folgendes umfasst:
Mischen einer Perfluorsulfonsäure-Ionomerdispersion oder Kohlenwasserstoffionomer-Lösung mit einem Additiv, das mindestens zwei Stickstoffatome umfasst, um ein Lösungsgemisch aus lonomer und Additiv zu schaffen; und

12. Protonenaustauschmembran für eine Membranelektrodenanordnung umfassend:
Perfluorsulfonsäure oder ein Kohlenwasserstoffionomer; und
ein Additiv, wobei das Additiv ein nicht komplexierter Chelat-Ligand mit mindestens zwei Stickstoffatomen ist, die als Koordinierungsstellen fungieren können, so dass das nicht komplexierte Additiv in der fertigen Protonenaustauschmembran zur Verfügung steht, um mit Metallionen in der Membran Chelatkomplexe zu bilden.

13. Membran nach Anspruch 12, wobei das Additiv aus einer Gruppe ausgewählt wird, die kleine Moleküle, Polymere oder Kombinationen hiervon umfasst.

14. Membran nach Anspruch 12, wobei das Additiv in einer Menge von rund 0,01 bis 10 Gewichtsprozent der Membran vorliegt.

15. Membran nach Anspruch 12, wobei das Additiv in einer Menge von rund 0,5 bis 2,0 Gewichtsprozent der Membran vorliegt.

16. Verstärkte protonenleitende Membran umfassend:
ein Perfluorsulfonsäure- oder ein Kohlenwasserstoffionomer; und
eine poröse Polymermatrix;
wobei die poröse Polymermatrix ein Additiv umfasst und wobei das Additiv ein nicht komplexierter Chelat-Ligand mit mindestens zwei Stickstoffatomen oder mit mindestens zwei Stickstoffatome umfassenden chemischen Einheiten ist und wobei die mindestens zwei Stickstoffatome als Koordinierungsstellen fungieren können, so dass das nicht komplexierte Additiv in der fertigen protonenleitenden Membran zur Verfügung steht, um mit Metallionen in der Membran Chelatkomplexe zu bilden.

17. Verstärkte protonenleitende Membran umfassend
eine Perfluorsulfonsäure mit einem Additiv oder ein Kohlenwasserstoffionomer mit einem Additiv, und eine poröse Polymermatrix, wobei das Additiv ein nicht komplexierter Chelat-Ligand mit mindestens zwei Stickstoffatomen ist, die als Koordinierungsstellen fungieren können, so dass das nicht komplexierte Additiv in der fertigen protonenleitenden Membran zur Verfügung steht, um mit Metallionen in der Membran Chelatkomplexe zu bilden.

18. Verstärkte protonenleitende Membran umfassend:
eine Perfluorsulfonsäure mit einem Additiv oder ein Kohlenwasserstoffionomer mit einem Additiv; und eine poröse Polymermatrix umfassend ein Additiv; wobei das Additiv ein nicht komplexierter Chelat-Ligand mit mindestens zwei Stickstoffatomen ist, die als Koordinierungsstellen fungieren können, so dass das nicht komplexierte Additiv in der fertigen protonenleitenden Membran zur Verfügung steht, um mit Metallionen in der Membran Chelatkomplexe zu bilden.

19. Verstärkte protonenleitende Membran nach einem der Ansprüche 16 - 18, wobei die poröse Polymermatrix ein Polymer umfasst, das aus einer Gruppe ausgewählt wird, die Folgendes umfasst:
Polytetrafluorethylen, Polyvinylidenfluorid, Poly(vinylidenfluorid-co-hexafluorpropylen), Poly(ethylen), Poly(propylen), Poly(ethylen-co-propylen), Poly(ethersulfon), Poly(etherketon), Poly(imid), Poly(benzimidazol) und Kombinationen hiervon.

20. Verstärkte protonenleitende Membran nach einem der Ansprüche 16 -18, wobei die poröse Polymermatrix ein Polymer umfasst, das aus einer Gruppe ausgewählt wird, die Folgendes umfasst:
sulfoniertes Polytetrafluorethylen, sulfoniertes Polyvinylidenfluorid, sulfoniertes Poly(vinylidenfluorid-co-hexafluorpropylen), sulfoniertes Poly(ethylen), sulfoniertes Poly(propylen), sulfoniertes Poly(ethylen-co-propylen), sulfoniertes Poly(etherketon), sulfoniertes Poly(ethersulfon), sulfoniertes Poly(imid), sulfoniertes Poly(benzimidazol) und Kombinationen hiervon.

21. Verstärkte protonenleitende Membran nach einem der Ansprüche 16 - 18, wobei die poröse Polymermatrix ein Polymer umfasst, das aus einer Gruppe ausgewählt wird, die Folgendes umfasst:
phosphoniertes Polytetrafluorethylen, phosphoniertes Polyvinylidenfluorid, phosphoniertes Poly(vinylidenfluorid-co-hexafluorpropylen), phosphoniertes Poly(ethylen), phosphoniertes Poly(propylen), phosphoniertes Poly(ethylen-co-propylen), phosphoniertes Poly(etherketon), phosphoniertes Poly(ethersulfon), phosphoniertes Poly(imid), phosphoniertes Poly(benzimidazol) und Kombinationen hiervon.

22. Membranelektrodenanordnung umfassend:
eine protonenleitende Membran; und
mindestens eine Elektrode;
wobei die protonenleitende Membran ein Perfluor-Rückgrat oder ein Kohlenwasserstoffionomer mit chemischen Einheiten zur Bildung von Chelatkomplexen mit Metallionen umfasst und wobei die chemischen Einheiten mindestens zwei Stickstoffatome umfassen, die als Koordinierungsstellen fungieren können, so dass die nicht komplexierten chemischen Einheiten in der fertigen protonenleitenden Membran zur Verfügung stehen, um mit Metallionen in der Membran Chelatkomplexe zu bilden.

23. Membranelektrodenanordnung nach Anspruch 22, wobei die Membranelektrodenanordnung entweder durch Verbonden der Elektroden mit der protonenleitenden Membran oder durch Verbonden einer katalysatorbeschichteten Membran mit einer Gasdiffusionsschicht hergestellt wird.

## Revendications

1. Procédé de formation d'un ensemble membrane-électrode comprenant des électrodes et une membrane échangeuse de protons, le procédé consistant à :
incorporer un additif dans la membrane échangeuse de protons de l'ensemble membrane-électrode, comprenant une étape permettant de mélanger l'additif au matériau de membrane échangeuse de protons, l'additif étant un lignant de chélate non complexé ayant au moins deux atomes d'hydrogène qui peuvent servir de sites de coordination pour que l'additif incomplet dans la membrane échangeuse de protons terminée soit disponible pour former des complexes de chélate présentant des impuretés d'ion métallique dans la membrane, et la membrane est une membrane en acide perfluorosulfurique ou une membrane en ionomère d'hydrocarbure.

2. Procédé selon la revendication 1, l'additif étant sélectionné dans le groupe constitué de petites molécules, de polymères ou leurs combinaisons.

3. Procédé selon la revendication 1, l'additif étant une petite molécule sélectionnée dans le groupe constitué de : 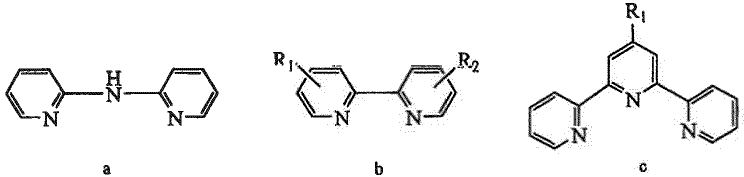 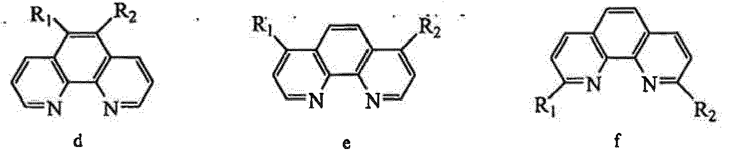 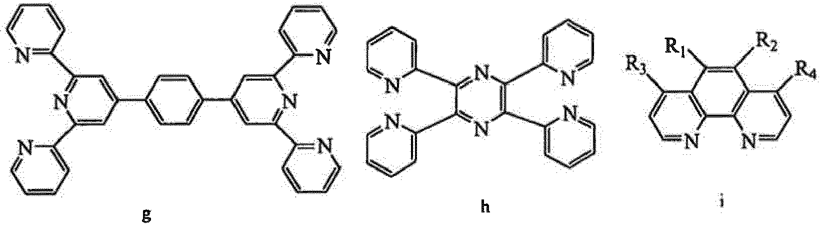 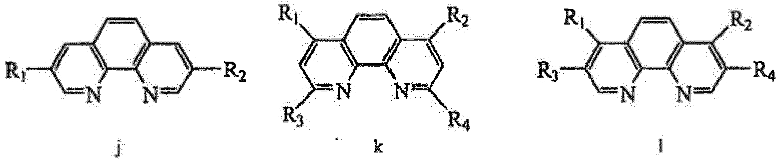 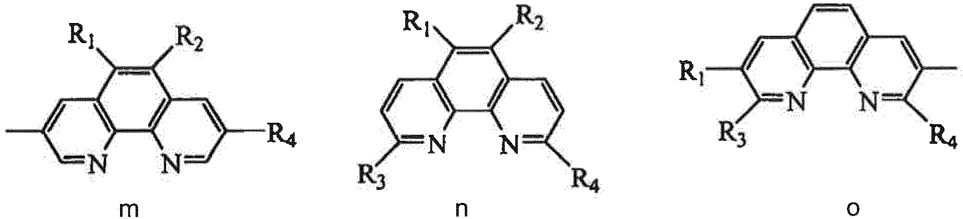
R₁, R₂, R₃ et R₄ étant sélectionnés indépendamment dans le groupe constitué de :
H, CH₃(CH₂)₂, CH₃(CH₂)ₙO, CF₃(CF₂)ₙ, CF₃(CF₂)n_{O}, COOH, PO(OH)₂, SO₃H, NH₂ OH, 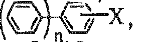 X = H, COOH, PO(OH)₂, SO₃H,
et n = 0 -10.

4. Procédé selon la revendication 1, l'additif étant un polymère et lesdits au moins deux atomes d'azote étant sur une chaîne principale d polymère.

5. Procédé selon la revendication 4, l'additif étant sélectionné dans le groupe constitué de : 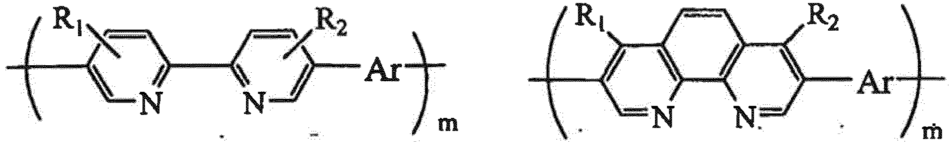 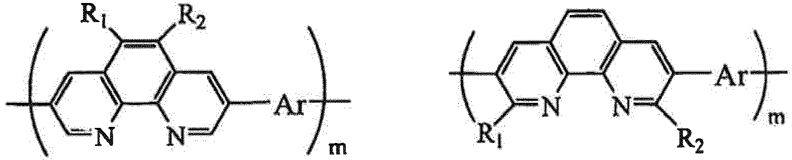 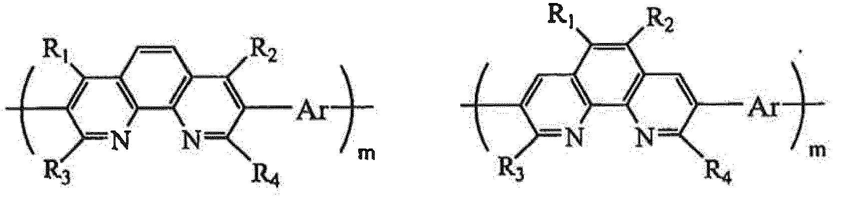 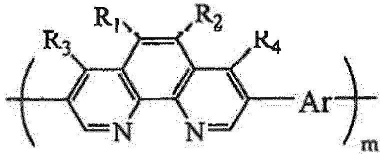
m = 2 -100,
et R₁, R₂, R₃ et R₄ étant sélectionnés indépendamment dans le groupe constitué de :
II, CII₃(CII₂)ₙ, CII₃(CII₂)ₙO, CF₃(CF₂)ₙ, CF₃(CF₂)ₙO, COOH, PO(OH)₂, SO₃H, NH₂ OH, 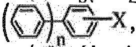 X = H, _{COOPH}, PO(OH)₂, SO₃H,
et Ar étant sélectionnés dans le groupe constitué de: 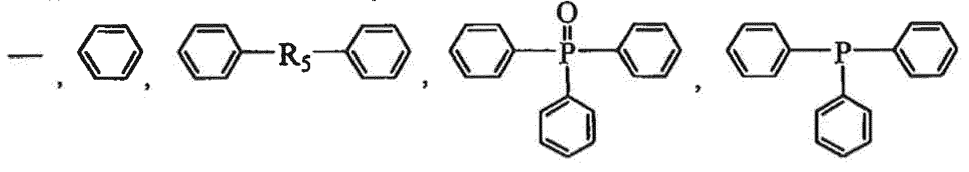
et R₅ étant sélectionné dans le groupe constitué de :
R₅= (CH₂)ₖ, (CF₂)ₖ, O, S, C(CF₃)₂, C(CH₃)₂, 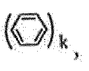
et n, k = 0 -10.

6. Procédé selon la revendication 1, l'additif étant un polymère et lesdits au moins deux atomes d'azote étant une ou plusieurs chaînes latérales du polymère.

7. Ensemble membrane-électrode formé selon le procédé de la revendication 1.

8. Ensemble électrode-membrane selon la revendication 7, l'ensemble électrolyte-membrane étant produite par liaison d'une membrane conductrice de protons à l'aide d'électrodes de cathode et d'anode.

9. Ensemble électrode-membrane selon la revendication 7, l'ensemble électrolyte-membrane étant produit par liaison d'une membrane revêtue de catalyseur à une couche de diffusion de gaz.

10. Procédé de protection d'une membrane d'échange de protons d'un ensemble membrane-électrode contre l'attaque de radical hydroxyle consistant à former un ensemble membrane-électrode selon le procédé de la revendication 1.

11. Procédé selon la revendication 1, l'incorporation de l'additif dans la membrane consiste à :
mélanger une dispersion d'ionomère d'acide perfluorosulfonique ou une solution d'ionomère d'hydrocarbure à un additif comprenant au moins deux atomes d'azote pour fournir une solution de mélange d'additif et d'ionomère ; et couler une membrane à partir de la solution de mélange d'additif et d'ionomère.

12. Membrane échangeuse de protons pour un ensemble membrane-électrode comprenant :
l'acide perfluorosulfonique et un ionomère d'hydrocarbure ; un additif, l'additif étant un lignant de chélate incomplet ayant au moins deux atomes d'azote qui peuvent servir de sites de coordination pour que l'additif incomplet dans la membrane échangeuse de protons terminée soit disponible pour former des complexes de chélate présentant des ions métalliques dans la membrane.

13. Membrane selon la revendication 12, l'additif étant sélectionné dans le groupe constitué de : petites molécules, de polymères ou leurs combinaisons.

14. Membrane selon la revendication 12, l'additif étant présent dans une proportion comprise entre environ 0,01 et 10 % en poids de la membrane.

15. Membrane selon la revendication 12, l'additif étant présent dans une proportion comprise entre environ 0,5 et 2,0 % en poids de la membrane.

16. Membrane de renfort conductrice de proton comprenant: un acide perfluorosulfonique ou un ionomère d'hydrocarbure ; et une matrice de polymère poreuse ; la matrice en polymère poreux comprenant un additif, l'additif étant un lignant de chélate incomplet ayant au moins deux atomes d'azote ou deux unités chimiques comprenant au moins deux atomes d'azote, lesdits deux atomes d'azote pouvant servir de sites de coordination pour que l'additif incomplet dans la membrane échangeuse de protons terminée soit disponible pour former des complexes de chélate présentant des ions métalliques dans la membrane.

17. Membrane de renfort conductrice de proton comprenant: un acide perfluorosulfonique et un additif ou un ionomère d'hydrocarbure comprenant un additif, et une matrice en polymère poreux, l'additif étant un lignant de chélate incomplet ayant au moins deux atomes d'azote qui peuvent servir de sites de coordination pour que l'additif incomplet dans la membrane conductrice de protons terminée soit disponible pour former des complexes de chélate présentant des ions métalliques dans la membrane.

18. Membrane de renfort conductrice de proton comprenant: un acide perfluorosulfonique et un additif ou un ionomère d'hydrocarbure comprenant un additif, et une matrice en polymère poreux comprenant un additif, l'additif étant un lignant de chélate incomplet ayant au moins deux atomes d'azote qui peuvent servir de sites de coordination pour que l'additif incomplet dans la membrane conductrice de protons terminée soit disponible pour former des complexes de chélate présentant des ions métalliques dans la membrane.

19. Membrane conductrice de protons de renfort selon l'une quelconque des revendications 16-18, la matrice en polymère poreux comprenant un polymère sélectionné dans le groupe constitué de polytétrafluoroéthylène, polyfluorure de vinylidène, poly(fluorure de vinylidène-co-hexafluoropropylène), poly(éthylène), poly(propylène), poly(éthylène-co-propylène), poly(éther sulfone), poly(éther cétone), poly(imide), poly(benzimidazole) et leurs combinaisons.

20. Membrane conductrice de protons de renfort selon l'une quelconque des revendications 16-18, la matrice en polymère poreux comprenant un polymère sélectionné dans le groupe constitué de polytétrafluoroéthylène sulfoné, polyfluorure de vinylidène sulfoné, poly(fluorure de vinylidène-co-hexafluoropropylène) sulfoné, poly(éthylène) sulfoné, poly(propylène) sulfoné, poly(éthylène-co-propylène) sulfoné, poly(éther cétone) sulfoné, poly(éther sulfone) sulfoné, poly(imide) sulfoné, poly(benzimidazole) sulfoné et leurs combinaisons.

21. Membrane de renfort conductrice de protons selon l'une quelconque des revendications 16-18, la matrice en polymère poreux comprenant un polymère sélectionné dans le groupe constitué de polytétrafluoroéthylène phosphoné, polyfluorure de vinylidène phosphoné, poly(fluorure de vinylidène-co-hexafluoropropylène) phosphoné, poly(éthylène) phosphoné, poly(propylène) phosphoné, poly(éthylène-co-propylène) phosphoné, poly(éther cétone) phosphoné, poly(éther sulfone) phosphoné, poly(imide) phosphoné, poly(benzimidazole) phosphoné et leurs combinaisons.

22. Ensemble membrane-électrode comprenant :
une membrane conductrice de proton ; et
au moins une électrode ;
la membrane conductrice de protons comprenant une chaîne principale perfluoro ou un ionomère d'hydrocarbure comprenant des unités chimiques pour former des complexes de chélate comprenant des ions métalliques ; les unités chimiques comprenant au moins deux atomes d'azote qui peuvent servir de sites de coordination pour que les unités chimiques non complexées dans la membrane conductrices de protons terminée soient disponibles pour former des complexes de chélate présentant des ions métalliques dans la membrane.

23. Ensemble membrane-électrodes selon la revendication 22, l'ensemble membrane-électrodes est produit soit par liaison d'électrodes à la membrane conductrice de protons soit par liaison d'une membrane revêtue de catalyseur à une couche de diffusion de gaz.
